Europäisches Patentamt

European Patent Office

Office européen des brevets

(11) Numéro de publication: **0 284 115 B1**

## (12) FASCICULE DE BREVET EUROPEEN

(45) Date de publication de fascicule du brevet: **04.11.92**  (51) Int. Cl.⁵: **H01M 10/48**, H02J 7/10

(21) Numéro de dépôt: **88200250.4**

(22) Date de dépôt: **12.02.88**

(54) **Dispositif de contrôle de la charge de batteries rechargeables.**

(30) Priorité: **18.02.87 FR 8702071**

(43) Date de publication de la demande:
**28.09.88 Bulletin 88/39**

(45) Mention de la délivrance du brevet:
**04.11.92 Bulletin 92/45**

(84) Etats contractants désignés:
**DE FR GB NL**

(56) Documents cités:

| | |
|---|---|
| DE-B- 1 671 684 | FR-A- 2 382 107 |
| FR-A- 2 467 501 | FR-A- 2 553 894 |
| US-A- 3 123 758 | US-A- 3 889 171 |
| US-A- 3 917 990 | US-A- 4 379 816 |
| US-A- 4 572 878 | |

(73) Titulaire: **LABORATOIRES D'ELECTRONIQUE PHILIPS**
**3, Avenue Descartes**
**F-94450 Limeil-Brévannes(FR)**

(84) Etats contractants désignés:
**FR**

(73) Titulaire: **N.V. Philips' Gloeilampenfabrieken**
**Groenewoudseweg 1**
**NL-5621 BA Eindhoven(NL)**

(84) Etats contractants désignés:

DE GB NL

(72) Inventeur: **Delmas, Gilles Société Civile**
**S.P.I.D.**
**209, rue de l'Université**
**F-75007 Paris(FR)**
Inventeur: **Hazan, Jean-Pierre Société Civile**
**S.P.I.D.**
**209, rue de l'Université**
**F-75007 Paris(FR)**
Inventeur: **Steers, Michel Société Civile**
**S.P.I.D.**
**209, rue de l'Université**
**F-75007 Paris(FR)**

(74) Mandataire: **Landousy, Christian et al**
**Société Civile S.P.I.D. 156, Boulevard Haussmann**
**F-75008 Paris(FR)**

# Description

L'invention concerne un dispositif pour le contrôle de la charge de batteries rechargeables comprenant des moyens électriques de fourniture du courant de charge à la batterie, un premier capteur de température sensible à la température de la batterie, un second capteur de température sensible à la température ambiante et un dispositif d'arrêt de charge en fin de charge contrôlé par les premier et second capteurs.

A la fin du processus de charge des batteries rechargeables notamment les batteries nickel-cadmium, il y a apparition d'une très forte élévation de pression et d'un accroissement de température. Si la charge n'est pas arrêtée en temps utile il peut s'ensuivre une détérioration rapide des batteries par surpression et/ou par excès de température. Cette élévation de température devient en fin de charge très rapide lorsque la charge avoisine 100% de sa capacité. Il est donc nécessaire de stopper la charge lorsque celle-ci avoisine cette valeur maximale.

Une méthode envisageable est de suivre la température de la batterie. Un dispositif de charge qui a effectué cette opération est connu du document FR 2 467 501 dans lequel les capteurs de température, qui sont des diodes ou des thermistances, interviennent selon différentes lois de compensation dans un circuit électronique qui agit sur le dispositif d'arrêt de charge.

Or les capteurs de température qui sont utilisés dans ce document sont des composants discrets ayant un encombrement non négligeable. Ils doivent être disposés dans un support mécanique ce qui fait que leur contact thermique est de mauvaise qualité. Ceci est également vrai dans le cas où ces composants sont utilisés d'une manière isolée.

D'autre part, les batteries et les chargeurs de batteries sont d'un usage très répandu et ces produits doivent avoir des prix de revient très bon marché. Ceci n'est pas tout à fait le cas des composants discrets cités et de leurs supports. Le problème technique posé est donc de réaliser un dispositif de charge de batteries ayant des capteurs de température qui permettent un très bon contact thermique avec l'élément dont on veut déterminer la température, et qui soient d'un coût très faible. La solution à ce problème technique consiste en ce que le premier et le second capteurs de température sont déposés sur une feuille mince souple isolante thermiquement et électriquement, la feuille mince étant appliquée au moins partiellement dans un boîtier pour recevoir la batterie rechargeable afin que le premier capteur soit en contact thermique avec la batterie lorsqu'elle est introduite dans le boîtier pour déterminer sa température et que le second capteur soit en contact thermique avec un élément du dispositif de contrôle de charge afin de déterminer la température de l'environnement immédiat du boîtier, le dispositif d'arrêt de charge arrêtant la charge de la batterie lorsque l'écart entre les températures déterminées par les deux capteurs a atteint une valeur prédéterminée.

Les capteurs peuvent être des résistances sérigraphiées. Elles peuvent être disposées selon un montage en pont de Wheatstone.

Selon un premier mode de réalisation les deux capteurs sont sérigraphiés sur la même face de la feuille mince. La feuille mince souple peut être repliée sur elle-même. Dans ce dernier cas chaque capteur peut être isolé de la source thermique qui ne la concerne pas par deux fois l'épaisseur de la feuille mince.

Selon un second mode de réalisation les deux capteurs peuvent être sérigraphiés chacun sur une des faces de la feuille mince. Dans ce cas chaque capteur est isolé de la source thermique qui ne concerne pas par une simple épaisseur de la feuille mince. La sérigraphie est alors faite en deux opérations.

Lorsqu'ils sont montés en pont de Wheatstone, les deux capteurs forment un système différentiel qui peut être utilisé de différentes façons pour déterminer la fin de charge d'une batterie nickel-cadmium selon les caractéristiques thermiques du coffret de la batterie et le comportement de la batterie pour une vitesse de charge donnée. Le type de circuit électronique utilisé va dépendre de l'utilisation qui est faite de la mesure de l'écart de température.

Dans une première méthode correspondant à un montage électronique simple, on arrête la charge quand la température de la batterie dépasse celle de la température ambiante d'une valeur dT donnée. Cette valeur dT est déterminée selon le type de montage thermomécanique (boîtier, coffret, ...), selon le type de batterie, la vitesse de charge ...

L'invention sera mieux comprise à l'aide des figures suivantes données à titre d'exemple non limitatif, qui représentent :

Figure 1 : des courbes d'élévation de la température et de la tension d'une batterie nickel-cadmium en fonction du pourcentage de charge.

Figure 2 : une disposition des capteurs déposés sur le support souple selon l'invention dans un premier mode de réalisation.

Figure 3 : une autre disposition selon un second mode de réalisation.

Figure 4 : une autre disposition selon un troisième mode de réalisation.

Figure 5 : un schéma électrique de principe du dispositif de charge de batteries rechargeables selon l'invention.

Figure 6 : un schéma d'implantation des deux capteurs selon un pont de Wheatstone.

Figure 7 : un schéma électrique analogue à celui de la figure 5 avec le schéma d'implantation de la figure 6.

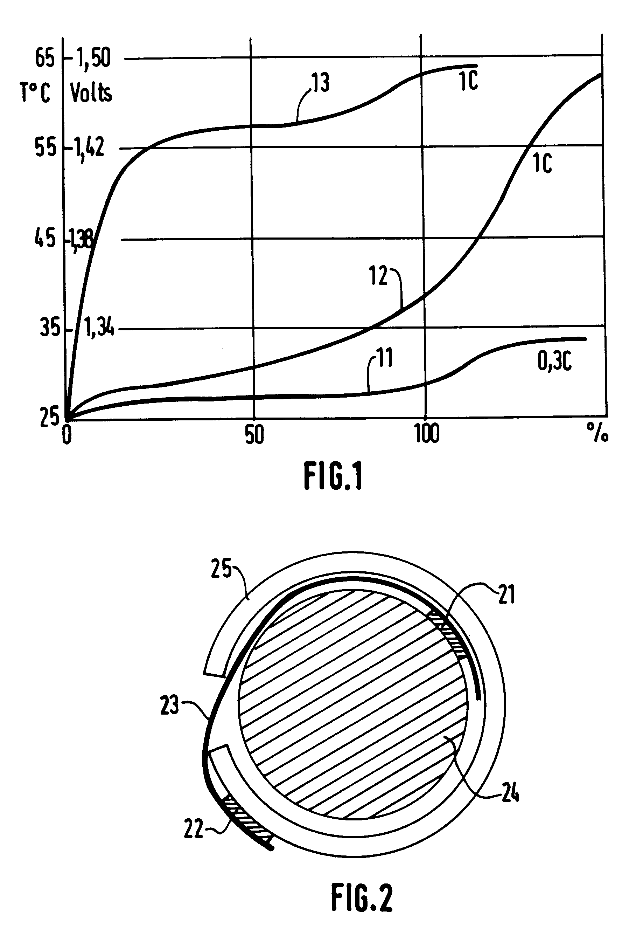

Sur la figure 1 sont représentées deux courbes 11, 12 de l'élévation de température d'une batterie respectivement pour des courants de charge de 0,3 C et 1 C, où C représente le courant de charge d'une batterie égal à la capacité nominale en ampère-heure de la batterie. La courbe 11 indique que l'élévation de température reste faible et sensiblement constante tant que la charge de la batterie n'avoisine pas les 100% de charge. A partir d'environ 100% de charge, l'accroissement de température devient plus important puis la courbe présente un point d'inflexion pour croître moins rapidement ensuite. Cet accroissement de température vient du fait que lorsque le processus d'oxydation de l'hydroxyde de nickel est terminé et que la charge est complète, le courant de charge est utilisé uniquement pour générer de l'oxygène sur l'électrode positive. Par ailleurs il existe une réaction électrochimique à la cathode qui permet de recombiner en tout ou partie de l'oxygène émis à l'anode et ceci avec dégagement de chaleur. La courbe 12 représente les mêmes mécanismes mais compte tenu du courant de charge beaucoup plus élevé, 1 C, l'élévation de température se produit beaucoup plus rapidement. Dans ce cas, le point d'inflexion est déplacé et sa position dépend des caractéristiques dimensionnelles et thermiques de la batterie et de son environnement. Aux élévations de températures élevées, une détérioration de la batterie peut apparaître. La courbe 13 représente les variations de la tension à la batterie au cours de la charge. Il apparaît que les variations de température sont beaucoup plus significatives lorsque la charge est aux environs de 100%. Ces courbes 11, 12 d'élévation de température sont représentées pour une température ambiante de 25°C. Elles restent sensiblement analogues lorsque la température ambiante est quelconque comprise entre une température basse et une température élevée dans les conditions habituelles d'utilisation. Les capteurs de température selon l'invention vont donc permettre d'adapter la charge de la batterie à des températures ambiantes différentes en opérant en mode différentiel.

La figure 2 représente la disposition des capteurs 21, 22 de la feuille mince souple 23 par rapport à la batterie 24 et au boîtier de batterie 25. Les épaisseurs des capteurs 21, 22 et de la feuille mince souple 23 sont volontairement exagérées sur la figure. La feuille mince souple peut être constituée de kaptons, de polyester, de mylar ou d'autres polymères. Les capteurs 21, 22 sont des résistances sérigraphiées sur la même face de la feuille mince souple. Le diamètre de la batterie 24 et celui du boîtier 25 sont déterminés de sorte que la feuille mince souple revêtue de son capteur 21 s'insère à frottements doux dans l'espace entre la batterie 24 et le boîtier 25. Ainsi le capteur 21 est mis en contact thermique avec la batterie 24. L'autre extrémité de la feuille mince souple 23 porte, sur la même face, le second capteur 22. Elle sort de l'espace pour que le capteur 22 soit appliqué sur la paroi externe du boîtier 25 à l'aide du coffret, non représenté sur la figure, du dispositif de charge.

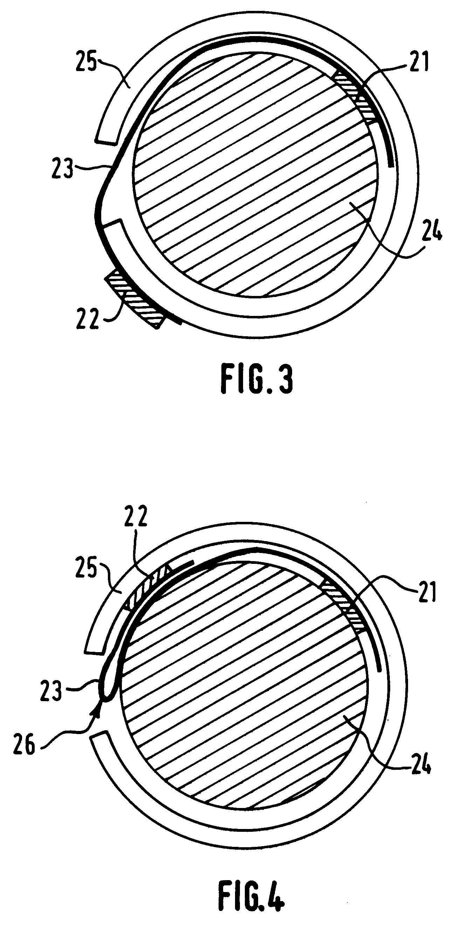

La figure 3 représente une autre disposition des éléments. La différence avec la disposition de la figure 2 consiste à disposer le capteur 22 sur la seconde face de la feuille mince souple 23. Le capteur 22 est ainsi en contact thermique avec le coffret du dispositif de charge.

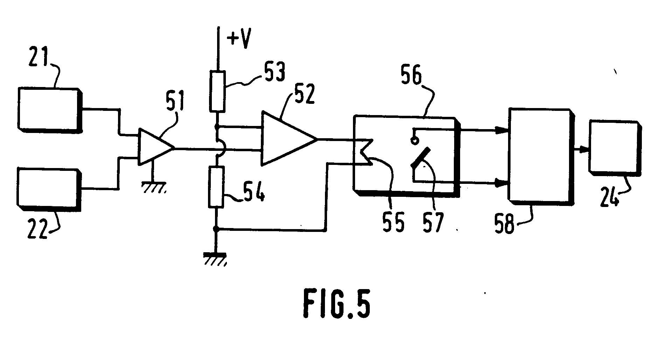

La figure 4 représente une autre disposition des éléments. Dans ce cas les deux capteurs 21, 22 sont sérigraphiés sur la même face de la feuille mince souple 23. Comme précédemment le capteur 21 est en contact avec la batterie 24, mais ici le capteur 22 est en contact avec la face interne du boîtier 25. Ainsi l'espace situé entre le boîtier 25 et la batterie 24 est déterminé afin que la feuille mince souple puisse s'y insérer en étant repliée sur elle-même. La pliure 26 peut rester accessible pour faciliter le montage et le démontage des éléments. Par analogie avec les représentations des figures 2 et 3 le capteur 22 disposé sur la feuille repliée peut être situé à l'extérieur du boîtier et déterminer soit la température du boîtier soit la température du coffret du dispositif de charge.

Les figures 2 et 4 indiquent une solution où les deux capteurs sont disposés sur la même face de la feuille mince souple. Ceci présente un avantage pour réaliser la sérigraphie. Dans le cas de la figure 3, où les capteurs sont déposés sur des faces différentes, il peut être nécessaire selon le dessin des connexions de prévoir par exemple des trous pour passer les connexions à travers la feuille mince souple. La feuille mince souple étant isolante thermiquement et électriquement, chaque capteur se trouve ainsi isolé thermiquement de l'élément dont il n'a pas à déterminer la température.

Les figures 2, 3 et 4 sont représentées avec une batterie et un boîtier à section circulaire, mais une section autre convient également.

La figure 5 représente un schéma électrique du dispositif de charge de batteries selon l'invention. Les deux capteurs sont par exemple formés chacun d'une résistance qui varie avec la température. Chaque résistance, reliée à une alimentation électrique, est réunie à un amplificateur opérationnel 51 qui délivre un signal d'écart de température qui est introduit dans un comparateur 52. La seconde entrée du comparateur est reliée au point commun d'un pont diviseur résistif 53, 54. Le comparateur 52 excite le bobinage 55 d'un relais 56 dont le contacteur 57 agit sur les moyens électriques de fourniture de courant de charge 58 qui alimentent la batterie 24. Le pont diviseur résistif 53, 54 détermine une tension électrique représentative de la valeur prédéterminée à laquelle on veut modifier le courant de charge. Cette valeur prédéterminée est déterminée à l'aide, par exemple, des courbes d'élévation de température telles les courbes 11, 12 de la figure 1. Selon les dimensions, les capacités calorifiques, les échanges thermiques à la fois de la batterie 24, du boîtier 25 ainsi que du coffret du dispositif de charge, les équilibres thermiques avec le milieu environnant seront spécifiques à chaque dispositif. Pour cela, pour différents courants de charge, on trace différentes courbes d'élévation de température de la batterie dans son boîtier et dans son coffret. Selon les souhaits de l'utilisateur une charge plus ou moins rapide sera recherchée, ce qui déterminera le courant de charge désiré. L'élévation de température pour une charge de 100% peut alors être déterminée sur ces courbes et constituer l'écart de température recherché pour déterminer le pont diviseur résistif 53, 54 de la figure 5. Cet écart est par exemple de 12° pour un courant de 1 C sur la figure 1. L'écart par rapport à la température ambiante ainsi déterminée constitue par exemple la valeur prédéterminée.

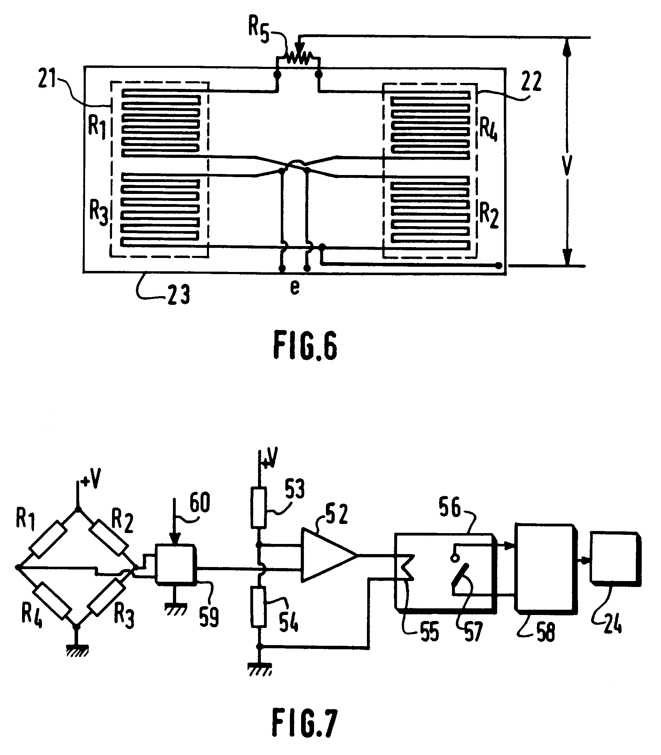

Préférentiellement l'invention utilise des capteurs 21, 22 formés chacun de deux résistances dont les valeurs varient de façon appréciable avec la température, l'ensemble étant monté sous la forme d'un pont de Wheatstone. La figure 6 représente un capteur 21 formé des résistances R1 et R3 et un capteur 22 formé des résistances R2 et R4. Ces résistances sont disposées en série en boucle selon l'ordre R1, R2, R3, R4. Le pont de Wheastone ainsi obtenu est alimenté selon une diagonale et délivre un signal de déséquilibre e selon l'autre diagonale. Il est possible de disposer un potentiomètre R5 pour tenir compte des petites variations de résistances dues à la réalisation ou au vieillissement et équilibrer ainsi le pont en l'absence d'effet thermique. Les quatre résistances R1, R2, R3, R4 sont disposées sur la feuille mince souple 23.

Si R1 et R3 sont les résistances en contact avec la batterie et R2 et R4 les résistances en contact avec la température ambiante, on a un signal e égal à :

$$e = \frac{v}{4} \left( \frac{dR1}{R1} + \frac{dR3}{R3} - \frac{dR2}{R2} - \frac{dR4}{R4} \right)$$

où v est l'alimentation du pont de Wheastone. Un équilibrage du pont peut être réalisé au début de la mesure. Les résistances varient en fonction de la température. Par simplification on peut considérer que ces variations relatives sont linéaires de la forme dR/R = aT. Si par ailleurs les résistances R1 et R3 d'une part, et R2 et R4 d'autre part, varient de la même façon on a :

$$e = \frac{v}{4} (2aT_1 - 2aT_2)$$
soit
$$e = \frac{v}{2} a (T_1 - T_2).$$

Cette équation indique que le capteur est un capteur différentiel qui délivre un signal dépendant de l'écart entre la température de la batterie et la température ambiante. L'évolution du signal en fonction du temps de charge dépend des caractéristiques thermiques du coffret, de la vitesse de charge, ... Toutes choses égales par ailleurs, la détermination d'une fin de charge sera beaucoup moins influencée par la température ambiante avec une mesure de température différentielle.

Le schéma de la figure 6 peut être utilisé dans le schéma de la figure 5 pour obtenir celui de la figure 7. La tension de déséquilibre du pont est introduite dans un amplificateur 59 qui délivre un signal au comparateur 52. Au lieu du potentiomètre R5 de la figure 6 il est possible sur la figure 7 d'introduire un signal de compensation 60 sur l'amplificateur 59. Les autres éléments sont identiques à ceux de la figure 5.

L'invention vient d'être décrite en utilisant une valeur prédéterminée choisie à partir de courbes d'élévation de température de la batterie préalablement établie en lui donnant une valeur fixe. Il est également possible d'utiliser la mesure de l'écart de température que permet l'invention selon un autre critère. Ainsi, il est constaté sur les courbes de la figure 1 que la courbe de l'élévation de température présente un point d'inflexion lorsque la charge est voisine de 100%. Il est donc possible d'exploiter l'écart de température déterminé par l'invention en déterminant ce point d'inflexion et en arrêtant la charge de la batterie quand ce point d'inflexion est atteint. Ceci peut être par exemple effectué à l'aide d'un microprocesseur qui détermine en temps réel dans des conditions d'utilisation réelle l'écart de température représenté sur la figure 1 et détermine les variations de cet écart à des temps régulièrement espacés.

Lorsque le dispositif de charge contient deux batteries, il est possible de disposer la résistance R1 sur une batterie et la résistance R3 sur l'autre batterie, afin que le dispositif de contrôle de charge se déclenche sur la batterie qui chauffe le plus vite.

D'autre part, l'intervention du dispositif d'arrêt de charge peut s'opérer par tout ou rien ou par une réduction progressive du courant de charge. Un microprocesseur peut permettre de rendre automatique les différentes réductions de courant de charge et délivrer la tension de compensation destinée à compenser des variations des signaux dues au vieillissement des résistances.

## Revendications

1. Dispositif pour le contrôle de la charge de batteries rechargeables comprenant des moyens électriques de fourniture de courant de charge à la batterie, un premier capteur de température sensible à la température de la batterie, un second capteur de température sensible à la température ambiante et un dispositif d'arrêt de charge en fin de charge contrôlé quand l'écart entre les températures déterminées par les deux capteurs a atteint une valeur prédéterminée, caractérisé en ce que le premier (21) et le second (22) capteurs de température sont déposés sur une feuille mince souple (23) isolante thermiquement et électriquement, la feuille mince (23) étant appliquée au moins partiellement dans un boîtier (25) pour recevoir la batterie rechargeable (24) afin que le premier capteur soit en contact thermique avec la batterie lorsqu'elle est introduite dans le boîtier pour déterminer sa température et que le second capteur soit en contact thermique avec un élément du dispositif de contrôle de charge afin de déterminer la température de l'environnement immédiat du boîtier (25).

2. Dispositif selon la revendication 1, caractérisé en ce que l'élément du dispositif de contrôle de charge est le boîtier (25).

3. Dispositif selon une des revendications 1 ou 2, caractérisé en ce que les capteurs (21) (22) sont constitués de résistances sérigraphiées.

4. Dispositif selon la revendication 3, caractérisé en ce que les capteurs sont réalisés selon un montage en pont de Wheatstone.

5. Dispositif selon une des revendications 1 à 4, caractérisé en ce que les deux capteurs (21) (22) sont situés chacun sur une des faces de la feuille mince souple (23).

6. Dispositif selon une des revendications 1 à 4, caractérisé en ce que les deux capteurs (21) (22) sont montés sur la même face de la feuille mince souple (23).

7. Dispositif selon la revendication 6, caractérisé en ce que la feuille mince souple est repliée sur elle-même.

## Claims

1. A device for controlling the charging of rechargeable batteries comprising, electric means for supplying charging current to the battery, a first temperature sensor sensitive to the temperature of the battery, a second temperature sensor sensitive to the ambient temperature and a device for stopping the charging at the end of the charging operation and controlled when the difference between the temperatures determined by the two sensors has reached a predetermined value, characterized in that the first (21) and second (22) temperature sensors are deposited on a thin flexible thermally and electrically insulating sheet (23), the thin sheet (23) being arranged, at least in part in a casing (25) for receiving the rechargeable battery (24) in a manner such that the first sensor is in thermal contact with the battery when it is introduced into the casing thereby to determine its temperature and in that the second sensor is in thermal contact with an element of the device for controlling the charging in order to determine the temperature of the immediate surroundings of the casing (25).

2. A device as claimed in Claim 1, characterized in that the element of the device for controlling the charging is the casing (25).

3. A device as claimed in any one of Claims 1 or 2, characterized in that the sensors (21) (22) are constituted by resistors applied by silk screen printing.

4. A device as claimed in Claim 3, characterized in that the sensors are connected in a Wheatstone bridge arrangement.

5. A device as claimed in any one of Claims 1 to 4, characterized in that the two sensors (21) (22) are situated on opposite surfaces of the flexible thin sheet (23).

6. A device as claimed in any one of Claims 1 to 4, characterized in that the two sensors (21) (22) are mounted on the same surface of the flexible thin sheet (23).

7. A device as claimed in Claim 6, characterized in that the flexible thin sheet is folded on itself.

## Patentansprüche

1. Vorrichtung zur Überwachung der Aufladung von wiederaufladbaren Batterien, mit elektrischen Mitteln zur Lieferung eines Ladestroms an die Batterie, einem ersten, für die Temperatur der Batterie empfindlichen Temperatursensor, einem zweiten, für die Umgebungstemperatur empfindlichen Temperatursensor und einer Einrichtung zum Ladestopp am Ende des überwachten Ladevorgangs, wenn der Unterschied zwischen den von den zwei Sensoren bestimmten Temperaturen einen vorgegebenen Wert erreicht hat, dadurch gekennzeichnet, daß die ersten (21) und zweiten (22) Temperatursensoren auf einer dünnen, flexiblen, thermisch und elektrisch isolierenden Folie (23) angebracht sind, wobei die dünne Folie (23) mindestens teilweise in einem Gehäuse (25) zur Aufnahme der wiederaufladbaren Batterie (24) angeordnet ist, damit der erste Sensor zur Bestimmung der Temperatur der Batterie mit der Batterie in Wärmekontakt steht, wenn diese in das Gehäuse eingebracht wird, und der zweite Sensor zur Bestimmung der Temperatur der direkten Umgebung des Gehäuses mit einem Element der Ladeüberwachungsvorrichtung in Wärmekontakt steht.

2. Vorrichtung nach Anspruch 1, dadurch gekennzeichnet, daß das Element der Ladeüberwachungsvorrichtung das Gehäuse ist.

3. Vorrichtung nach Anspruch 1 oder 2, dadurch gekennzeichnet, daß die Sensoren (21) (22) von im Siebdruckverfahren hergestellten Widerständen gebildet werden.

4. Vorrichtung nach Anspruch 3, dadurch gekennzeichnet, daß die Sensoren entsprechend einer Wheatstone-Brückenschaltung angeordnet sind.

5. Vorrichtung nach den Ansprüchen 1 bis 4, dadurch gekennzeichnet, daß die beiden Sensoren (21) (22) jeweils aufeiner der Seiten der dünnen flexiblen Folie (23) liegen.

6. Vorrichtung nach den Ansprüchen 1 bis 4, dadurch gekennzeichnet, daß die beiden Sensoren (21) (22) auf derselben Seite der dünnen flexiblen Folie (23) angebracht sind.

7. Vorrichtung nach Anspruch 6, dadurch gekennzeichnet, daß die dünne flexible Folie in sich gefaltet ist.

FIG.1

FIG.2

FIG.3

FIG.4

FIG.5

FIG.6

FIG.7